# DEMANDE DE BREVET EUROPEEN

(11) **EP 4 559 599 A1**
(43) Date de publication de la demande: **28.05.2025**
(21) Numéro de dépôt: 24213808.9
(22) Date de dépôt: 19.11.2024
(51) Int. Cl.: B22F 10/12, B22F 12/30, B29C 64/135, B29C 64/245, B33Y 10/00, B33Y 30/00, B33Y 70/10

(54) **PROCEDE DE FABRICATION DE PIECES CRUES EN MATERIAU CERAMIQUE ET/OU METALLIQUE PAR LA TECHNIQUE DES PROCEDES ADDITIFS**

(30) Priorité: 23.11.2023 FR 2312971
(71) Demandeur: S.A.S 3DCeram-Sinto, 87270 Bonnac la Cote (FR)
(72) Inventeur: CHAPUT, Christophe, 87410 Le Palais-sur-Vienne (FR); LOURADOUR, Eric, 87000 Limoges (FR); SCHWEIZER, Stéphane, 87220 FEYTIAT (FR)
(74) Mandataire: Cabinet Chaillot

(57) **Abrégé**

Selon l'invention, avant de réaliser la première couche : on couvre la plate-forme de construction d'une feuille de support apte à être sollicitée contre celle-ci en formant une surface rigide et fixe de réception des couches successives apte à retenir sur celle-ci les couches successives formées ; et on plaque par aspiration ladite feuille de support contre ladite plate-forme de construction ; on forme la pièce crue par la technique des procédés additifs ; et une fois la pièce crue ainsi formée, on supprime l'aspiration afin de détacher de ladite plate-forme ladite feuille de support sur laquelle se trouve la pièce crue avec la partie de la composition photodurcissable qui n'a pas été durcie ; on retire ladite partie de composition photodurcissable non durcie ; et on décroche ladite pièce crue de ladite feuille de support, caractérisé par le fait que la feuille de support est une feuille polymère présentant une épaisseur de 0,05 à 5 mm et une planéité inférieure à 70 % de l'épaisseur d'une couche, ladite feuille de support étant déformable pour permettre, une fois l'aspiration supprimée, de décrocher la pièce crue de celle-ci par application d'une contrainte sur ladite feuille de manière à la déformer dans le but de libérer la pièce crue.

## Description

La présente invention porte sur un procédé de fabrication, par la technique des procédés additifs, d'une pièce crue en au moins un matériau choisi parmi les matériaux céramiques et les matériaux métalliques.

La technique des procédés additifs, également appelée stéréolithographie, comprend généralement les étapes suivantes, pour l'obtention de ces pièces crues :
- on construit, par conception assistée par ordinateur, un modèle informatique de la pièce à fabriquer, modèle dont les dimensions sont légèrement plus grandes que celles de la pièce à fabriquer afin de prévoir un retrait du matériau céramique ou métallique au cours de la fabrication de la pièce ; et
- on fabrique la pièce par la technique des procédés additifs, technique selon laquelle :
   - on forme, sur un support rigide, une première couche d'une composition photodurcissable comprenant au moins une matière céramique ou métallique, au moins un monomère et/ou oligomère photodurcissable, au moins un photoinitiateur et le cas échéant au moins un plastifiant et/ou au moins un solvant et/ou au moins un dispersant ;
   - on fait durcir la première couche de la composition photodurcissable par irradiation (par balayage laser de la surface libre de ladite couche ou par système de projection à diodes) selon un motif défini à partir du modèle pour ladite couche, formant un premier étage ;
   - on forme, sur le premier étage, une seconde couche de la composition photodurcissable ;
   - on fait durcir la seconde couche de la composition photodurcissable, par irradiation selon un motif défini pour ladite couche, formant un deuxième étage, cette irradiation s'effectuant comme pour la première couche ;
   - optionnellement, on répète les étapes ci-dessus pour obtenir la pièce à l'état cru.

Ensuite, comme indiqué ci-dessus, pour obtenir la pièce finie, on nettoie la pièce à l'état cru pour enlever la composition non durcie ; on déliante la pièce à l'état cru nettoyée ; et on fritte la pièce à l'état cru nettoyée et déliantée pour obtenir la pièce finie.

Dans une fabrication par voie pâteuse, la composition photodurcissable se présente sous la forme d'une pâte dont la viscosité peut varier notamment de 1 Pa.s à l'infini pour un taux de cisaillement nul, et le support rigide est une plate-forme de travail supportant les différentes couches de la pièce en cours de construction ainsi que la pâte et l'on forme généralement chacune des couches par abaissement de la plate-forme de travail et étalement d'une épaisseur de pâte prédéfinie. Une réserve de pâte est stockée dans des réservoirs qui sont automatiquement vidés d'une quantité de pâte prédéfinie à chaque couche à l'aide d'un piston. Cela crée un bourrelet de pâte à étaler sur la couche supérieure de la pièce en cours de fabrication qui aura été abaissée auparavant par la plate-forme de travail. Chaque couche est généralement étalée par raclage par une lame de raclage qui balaye la surface de travail de la plate-forme de travail, par exemple en avançant suivant une direction horizontale rectiligne.

Un autre procédé de fabrication par voie pâteuse / crémeuse est décrit dans la demande de brevet FR3116461 qui utilise un système d'applicateur à réserve de suspension alimentée par un réservoir externe, l'empilement de couches s'effectuant dans un bac se remplissant de suspension à chaque formation de couche.

Dans une fabrication par voie liquide, la composition photodurcissable se présente sous la forme d'une suspension de faible viscosité.
- Dans un premier mode de réalisation par la voie liquide, le support rigide est une plate-forme que l'on fait descendre dans un bain de la suspension photodurcissable pour la recouvrir d'une couche de ladite suspension, couche que l'on fait ensuite durcir par irradiation comme indiqué ci-dessus. Sur cette première couche, on forme ensuite successivement chacune des autres couches par abaissement pas à pas de la plate-forme dans le bain de telle sorte que l'étage supérieur de la pièce en cours de formation soit abaissé sous la surface libre de la suspension photodurcissable pour la formation de la couche en question, laquelle est ensuite irradiée.
- Dans un deuxième mode de réalisation par la voie liquide, la suspension photodurcissable est contenue dans un réservoir à fond transparent pour l'irradiation, et la pièce est maintenue sur un support rigide qui est une plate-forme remontée pas à pas. Ainsi, on commence par faire durcir une couche de fond, puis la plate-forme est remontée d'un pas pour permettre à la suspension de constituer une nouvelle couche que l'on fait alors durcir, l'opération étant répétée à chaque couche.
- Dans un troisième mode de réalisation par la voie liquide, la suspension photodurcissable est étalée en couche sur un film transparent pour l'irradiation, le film étant apte à se dérouler horizontalement. La pièce est formée sur une plate-forme rigide qui descend pour venir en contact avec la couche que l'on fait durcir par irradiation à travers le film. On déroule ensuite un nouveau segment de film revêtu d'une nouvelle couche photodurcissable et on réitère l'opération jusqu'à la fin de la construction de la pièce.

Il est important qu'il y ait une bonne liaison entre la surface de construction, autrement dit la plate-forme rigide de travail (face supérieure de la plate-forme de travail dans le cas respectivement de la voie pâteuse et du premier mode de réalisation précité en voie liquide, et face inférieure de la plate-forme dans le cas des deuxième et troisième modes de réalisation précités en voie liquide), et la pièce qui est construite par l'empilage des couches.

Un support est donc placé entre la plate-forme rigide de travail et la pièce en construction.

Le choix du support de construction de la pièce est crucial à la fois pour l'impression de la pièce et pour sa récupération. Le support doit en effet répondre à plusieurs contraintes antagonistes :
- adhérer suffisamment à la plate-forme rigide de travail pour garantir la stabilité des pièces ;
- avoir une planéité suffisante pour permettre l'impression de couches fines ;
- être facilement décollable de la plate-forme rigide de travail après l'impression ; et
- faciliter le décollement de la pièce crue afin de ne pas l'endommager après impression.

Actuellement, l'impression de pièces céramiques par stéréolithographie se déroule sur un support magnétique posé sur la plate-forme de construction et maintenu en place par aimantation. Si ce système permet d'obtenir une très bonne adhérence à la plate-forme de travail, ce système ne permet pas respecter les trois autres contraintes énoncées ci-dessus pour des pièces à parois fines, typiquement de moins de 1 mm, ou de pièces construites en couches fines, typiquement d'une épaisseur de 25 à 30 um.

La planéité des supports magnétiques est de l'ordre de 50 um, ce qui est insuffisante pour la construction en couches fines avec une épaisseur de 25 à 30 um. De plus, un défaut de planéité implique des accroches irrégulières au support en fonction de la position des pièces sur la plate-forme.

Par ailleurs, la rigidité des supports magnétiques et leurs aspérités rendent difficiles le décollement du support de la plate-forme et le décollement des pièces du support. Les pièces à parois fines présentent un fort risque d'endommagement lors de la phase de décollement, ce qui les rend inutilisables.

La difficulté du décollement des pièces à parois fines contraint également à diminuer le nombre de pièces que l'on peut imprimer en même temps sur une même imprimante, ce qui diminue leur productivité.

Pour résoudre ce problème, la Société déposante a recherché une solution permettant de construire des pièces en couches minces ainsi que des pièces à parois minces en garantissant un décollement des pièces sans dommage et en permettant un remplissage optimal de la plate-forme de construction.

A cet effet, la présente invention a pour objet un procédé de fabrication, par la technique des procédés additifs, d'une pièce crue en au moins un matériau choisi parmi les matériaux céramiques et les matériaux métalliques,
procédé suivant lequel des couches à base d'une composition photodurcissable comprenant ledit ou lesdits matériaux céramiques et métalliques à l'état pulvérulent et une partie organique comprenant au moins un monomère et/ou un oligomère photodurcissable et au moins un photoinitiateur sont amenées successivement à durcir par irradiation selon un motif défini pour chaque couche, la première couche étant formée sur une plate-forme de construction, et chaque autre couche étant formée puis amenée à durcir au contact de la couche précédente,
procédé suivant lequel :
   - avant de réaliser la première couche :
      - on couvre la plate-forme de construction d'une feuille de support apte à être sollicitée contre celle-ci en formant une surface rigide et fixe de réception des couches successives apte à retenir sur celle-ci les couches successives formées ; et
      - on plaque par aspiration ladite feuille de support contre ladite plate-forme de construction ;
   - on forme la pièce crue par la technique des procédés additifs ; et
   - une fois la pièce crue ainsi formée, on supprime l'aspiration afin de détacher de ladite plate-forme ladite feuille de support sur laquelle se trouve la pièce crue avec la partie de la composition photodurcissable qui n'a pas été durcie ;
   - on retire ladite partie de composition photodurcissable non durcie ; et
   - on décroche ladite pièce crue de ladite feuille de support,
ladite feuille de support étant déformable pour permettre, une fois l'aspiration supprimée, de décrocher la pièce crue de celle-ci par application d'une contrainte sur ladite feuille de manière à la déformer dans le but de libérer la pièce crue,
caractérisé par le fait que la feuille de support est une feuille polymère présentant une épaisseur de 0,05 à 5 mm et une planéité inférieure à 70 % de l'épaisseur d'une couche, de préférence inférieure à 40 % de l'épaisseur d'une couche, et que la plate-forme de construction présente une rugosité Ra de 0,4 à 3,2 um.

La planéité de la feuille de support peut être définie comme la différence de hauteur entre le point le plus bas de la feuille et son point le plus haut, lorsque la feuille est posée sur un support vertical.

Par exemple, dans le cas de la construction d'une pièce à l'aide de couches d'une épaisseur comprise entre 25 et 30 um, la planéité de la feuille support doit être inférieure à 17,5 um, de préférence inférieure à 10 um. Elle peut présenter, par exemple, une planéité de 8 um.

La feuille de support peut présenter un module d'Young de 2,5 à 80 GPa, de préférence de 2,5 à 15 GPa. Le module d'Young est mesuré conformément à la norme ISO-527 ; il s'agit d'une mesure de la flexibilité dans le cas d'une déformation appliquée dans la direction perpendiculaire à la surface de la feuille de support.

La feuille de support peut être une feuille en poly(téréphtalate d'éthylène) à orientation biaxale, une feuille en polyétherimide, une feuille en polyamide ou une feuille en polyoléfine.

On peut utiliser une composition photodurcissable de consistance semi-liquide, laquelle est étalée couche après couche sur la plate-forme de construction, les couches étant irradiées par le dessus,
ou on peut utiliser une composition photodurcissable en suspension,
la plate-forme étant descendue pas à pas dans la suspension pour former les couches successives irradiées par le dessus, ou
la plate-forme étant disposée à une distance correspondant à l'épaisseur d'une couche du fond d'un réservoir de composition photodurcissable à fond transparent pour
l'irradiation et remontée à chaque formation de couche, les couches étant à chaque fois irradiées par le dessous ; ou
la plate-forme venant à chaque formation de couche en contact avec une couche de suspension appliquée sur un segment d'un film transparent que l'on fait se dérouler horizontalement pour présenter un nouveau segment à chaque formation de couche, les couches étant à chaque fois irradiées par le dessous.

Par composition photodurcissable de consistance semi-liquide, on entend une suspension présentant une viscosité entre 0,5 et 100 Pa.s pour une gamme de gradients de cisaillement entre 1 et 20 s⁻¹. La viscosité est mesurée au rhéomètre de type cône/plan (modèle RM200 CP4000 Plus de Lamy Rheology), température de 22°C, pré-cisaillement à 1 s⁻¹ pendant 60 s, mesures de viscosité de 1 à 20 s⁻¹.

On peut utiliser, comme plate-forme de construction, une plaque plane perforée ou poreuse en un matériau rigide, tel que céramique, métallique ou plastique, dont on recouvre la face libre par la feuille de support et qui est reliée, par sa face opposée, à une pompe à vide ou à un générateur de vide, laquelle ou lequel est mis(e) en service pour plaquer la feuille de support sur la face libre de la plate-forme en formant la surface rigide et fixe de réception des couches successives de composition photodurcissable, et mis(e) hors service pour détacher ladite feuille de support de ladite plate-forme.

En particulier, on peut utiliser une plaque perforée dont les perforations se présentent notamment sous la forme de trous et de fentes reliés à la pompe à vide ou au générateur de vide, disposés pour assurer lorsque celui-ci ou celle-ci est en marche le plaquage de la feuille de support.

On peut utiliser, comme plate-forme de construction, un réceptacle, notamment en métal ou matière plastique, de forme plate, dont le fond présente des perforations reliées à une pompe à vide et qui reçoit une grille, notamment en métal, la feuille de support venant s'appliquer sur la bordure libre du réceptacle et sur la grille, ladite pompe à vide étant mise en service pour plaquer ladite feuille de support sur la bordure libre du réceptacle et sur la grille en formant la surface rigide et fixe de réception des couches successives de composition photodurcissable, et mise hors service pour détacher ladite feuille de support de ladite plate-forme.

La plate-forme de construction peut présenter un parallélisme de 0,002 à 0,1 % de la largeur de la plate-forme de construction.

On peut générer un vide de 13,33 Pa - 10⁻¹⁰ Pa (0,133 mbar-10⁻¹² mbar) .

La présente invention porte également sur une machine de fabrication par la technique de procédés additifs de pièces crues en un matériau choisi parmi les matériaux céramiques et les matériaux métalliques, suivant lequel des couches à base d'une composition photodurcissable comprenant ledit ou lesdits matériaux céramiques et métalliques à l'état pulvérulent et une partie organique comprenant au moins un monomère et/ou un oligomère photodurcissable et au moins un photoinitiateur sont amenées successivement à durcir par irradiation selon un motif défini pour chaque couche, la première couche étant formée sur une plate-forme de construction, et chaque autre couche étant formée puis amenée à durcir sur la couche précédente,
la machine comportant des moyens d'aspiration contre ladite plate-forme de construction d'une feuille de support destinée à la couvrir avant la réalisation de la première couche, en formant une surface de réception des couches successives, apte à retenir sur celle-ci les couches successives formées, lesdits moyens d'aspiration étant aptes à être désactivés pour détacher de ladite plate-forme ladite feuille de support sur laquelle se trouve la pièce crue avec la partie de la composition photodurcissable qui n'a pas été durcie,
la plate-forme de construction étant une plaque plane rainurée en un matériau rigide, tel que céramique, métallique ou plastique, dont on recouvre la face libre par la feuille de support et qui est reliée, par sa face opposée, aux moyens d'aspiration,
ladite feuille de support étant déformable pour permettre, une fois l'aspiration supprimée, de décrocher la pièce crue de celle-ci par application d'une contrainte sur ladite feuille de manière à la déformer dans le but de libérer la pièce crue,
ladite machine comportant également des moyens d'irradiation des couches successives,
caractérisée par le fait que la plate-forme de construction présente une rugosité Ra de 0,4 à 3,2 um et un parallélisme de 0,002 à 0,1 % de la largeur de la plate-forme de construction ; et
la feuille de support est une feuille polymère présentant une épaisseur de 0,05 à 5 mm et une planéité inférieure à 70 % de l'épaisseur d'une couche, de préférence inférieure à 40 % de l'épaisseur d'une couche.

La rugosité est mesurée conformément à la norme ISO-4288, longueur d'exploration Lt = 5,600 mm (0,800x5), la longueur d'exploration correspondant à la longueur de la plage de mesure pour les points servant à évaluer la rugosité, rugosité Ra, écart moyen arithmétique des points palpés par un rugosimètre relativement à une origine. Le parallélisme de la plate-forme de construction est l'écart entre les deux points les plus proches et les deux points les plus éloignés des deux surfaces constituant la plate-forme de construction.

Pour mieux illustrer l'objet de la présente invention, on va en décrire ci-après, à titre indicatif et non limitatif, un mode de réalisation particulier avec référence au dessin annexé.

Sur ce dessin :
La Figure 1 est une vue en perspective de la plate-forme de construction et de la feuille de support équipant une machine de stéréolithographie.
La Figure 2 est une vue schématique des étapes d'introduction d'une feuille d'aide au décrochage entre la plate-forme de construction et la feuille de support.

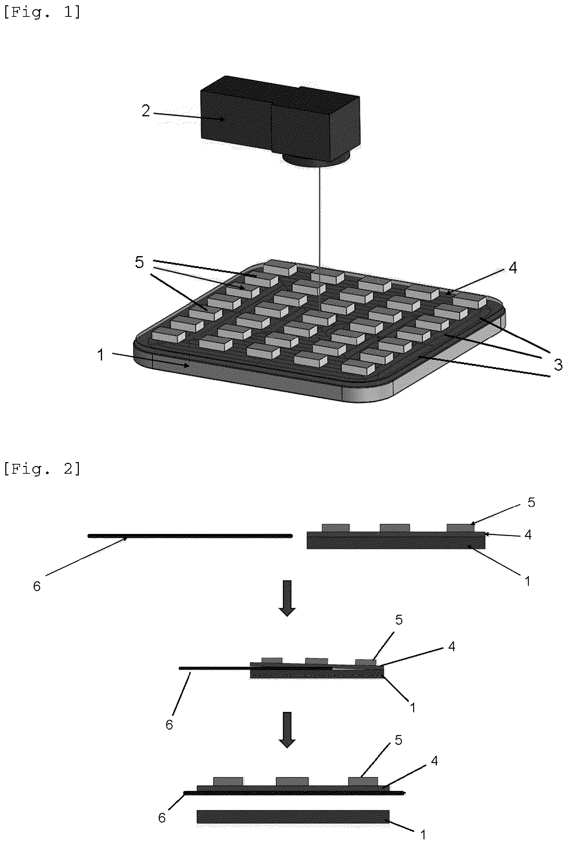

La machine de stéréolithographie est une machine classique de l'état de la technique, dont seule la plate-forme sera décrite plus en détails ci-après. La figure 1 présente la plate-forme de construction 1 qui est utilisée dans la présente invention. Un moyen d'irradiation laser 2 classique est utilisé pour l'irradiation des couches successives.

Cette plate-forme 1 présente une pluralité de rainures 3. On vient disposer une feuille de support 4, ladite feuille de support étant une feuille de poly(téréphtalate d'éthylène) à orientation biaxiale.

La feuille de support 4 présente une épaisseur de 190 um avec une planéité de 8 um, ainsi qu'un module d'Young de 4,5 GPa.

Il est possible de construire un pluralité de pièces 5 sur la feuille de support 4.

Avant la construction des pièces, le feuille de support 4 est disposée sur la plate-forme de construction 1 et l'air ente la plate-forme 1 et la feuille de support 4 est aspiré par les rainures 3 à l'aide d'un système de génération de vide venturi en boucle fermée. Ainsi, pendant la construction des pièces 5, la feuille de support 4 est fermement maintenue sur la plate-forme 1, ce qui garantit la stabilité des pièces 5.

Une fois que les pièces 5 sont construites, le vide est arrêté, ce qui permet de décoller facilement la feuille de support 4 de la plate-forme 1.

Dans le cas de la construction d'une pièce dans un système dit top-down, où les pièces en construction sont illuminées par le haut et la plate-forme de construction est plongée au fur et à mesure de la construction des pièces, il est possible d'utiliser une feuille d'aide au décrochage afin de faciliter encore le décrochage de la feuille support de la plate-forme de construction. Ceci est illustré sur la Figure 2.

On se munit d'une feuille d'aide au décrochage 6 qui est une feuille en poly(chlorure de vinyle) et qui présente un module d'Young de 4,2 GPa et une épaisseur de 4 mm supérieure à celle de la feuille de support 3.

Dans un premier temps, après avoir arrêté le vide, on vient placer la feuille d'aide au décrochage 6 à proximité de la plate-forme de construction 1 sur laquelle est placée la feuille de support 4 et sur laquelle les pièces 5 ont été construites.

On commence par légèrement décoller la feuille de support 4 de la plate-forme de construction 1 afin de venir placer le bord de la feuille d'aide au décrochage 6 entre la plate-forme 1 et la feuille de support 4. Ensuite on fait glisser progressivement la feuille d'aide au décrochage 6 entre la feuille de support 4 et la plate-forme de construction 1 comme cela est présenté sur le dessin central de la Figure 2.

Une fois que la feuille d'aide au décrochage 6 est entièrement introduite entre la feuille de support 4 et la plate-forme de construction 1, on peut soulever l'ensemble constitué des pièces 5, de la feuille de support 3 et de la feuille d'aide au décrochage 6.

Il est ainsi plus aisé de décoller la feuille de support 4 de la plate-forme 1. La plus grande épaisseur de la feuille d'aide au décrochage 6 permet également de manipuler plus facilement l'ensemble formé des pièces construites 5, de la feuille de support 4 et de la feuille d'aide au décrochage 6 afin de retirer plus facilement les pièces 5.

## Revendications

1. - Procédé de fabrication, par la technique des procédés additifs, d'une pièce crue en au moins un matériau choisi parmi les matériaux céramiques et
les matériaux métalliques,
procédé suivant lequel des couches à base d'une composition photodurcissable comprenant ledit ou lesdits matériaux céramiques et métalliques à l'état pulvérulent et une partie organique comprenant au moins un monomère et/ou un oligomère photodurcissable et au moins un photoinitiateur sont amenées successivement à durcir par irradiation selon un motif défini pour chaque couche, la première couche étant formée sur une plate-forme de construction, et chaque autre couche étant formée puis amenée à durcir au contact de la couche précédente,
procédé suivant lequel :
- avant de réaliser la première couche :
- on couvre la plate-forme de construction d'une feuille de support apte à être sollicitée contre celle-ci en formant une surface rigide et fixe de réception des couches successives apte à retenir sur celle-ci les couches successives formées ; et
- on plaque par aspiration ladite feuille de support contre ladite plate-forme de construction ;
- on forme la pièce crue par la technique des procédés additifs ; et
- une fois la pièce crue ainsi formée, on supprime l'aspiration afin de détacher de ladite plate-forme ladite feuille de support sur laquelle se trouve la pièce crue avec la partie de la composition photodurcissable qui n'a pas été durcie ;
- on retire ladite partie de composition photodurcissable non durcie ; et
- on décroche ladite pièce crue de ladite feuille de support,
ladite feuille de support étant déformable pour permettre, une fois l'aspiration supprimée, de décrocher la pièce crue de celle-ci par application d'une contrainte sur ladite feuille de manière à la déformer dans le but de libérer la pièce crue,
**caractérisé par le fait que** la feuille de support est une feuille polymère présentant une épaisseur de 0,05 à 5 mm et une planéité inférieure à 70 % de l'épaisseur d'une couche, de préférence inférieure à 40 % de l'épaisseur d'une couche, et que la plate-forme de construction présente une rugosité Ra de 0,4 à 3,2 µm.

2. - Procédé selon la revendication 1, **caractérisé par le fait que** la feuille de support présente un module d'Young de 2,5 à 80 GPa, de préférence de 2,5 à 15 GPa.

3. - Procédé selon la revendication 1, **caractérisé par le fait que** la feuille de support est une feuille en poly(téréphtalate d'éthylène) à orientation biaxale, une feuille en polyétherimide, une feuille en polyamide ou une feuille en polyoléfine.

4. - Procédé selon l'une des revendications 1 à 3, **caractérisé par le fait que** l'on utilise une composition photodurcissable de consistance semi-liquide, laquelle est étalée couche après couche sur la plate-forme de construction, les couches étant irradiées par le dessus, ou l'on utilise une composition photodurcissable en suspension,
la plate-forme étant descendue pas à pas dans la suspension pour former les couches successives irradiées par le dessus, ou
la plate-forme étant disposée à une distance correspondant à l'épaisseur d'une couche du fond d'un réservoir de composition photodurcissable à fond transparent pour l'irradiation et remontée à chaque formation de couche, les couches étant à chaque fois irradiées par le dessous ; ou
la plate-forme venant à chaque formation de couche en contact avec une couche de suspension appliquée sur un segment d'un film transparent que l'on fait se dérouler horizontalement pour présenter un nouveau segment à chaque formation de couche, les couches étant à chaque fois irradiées par le dessous.

5. - Procédé selon l'une des revendications 1 à 4, **caractérisé par le fait que** l'on utilise, comme plate-forme de construction, une plaque plane perforée ou poreuse en un matériau rigide, tel que céramique, métallique ou plastique, dont on recouvre la face libre par la feuille de support et qui est reliée, par sa face opposée, à une pompe à vide ou à un générateur de vide, laquelle ou lequel est mis(e) en service pour plaquer la feuille de support sur la face libre de la plate-forme en formant la surface rigide et fixe de réception des couches successives de composition photodurcissable, et mis(e) hors service pour détacher ladite feuille de support de ladite plate-forme.

6. - Procédé selon la revendication 5, **caractérisé par le fait que** l'on utilise une plaque perforée dont les perforations se présentent sous la forme de trous et de fentes reliés à la pompe à vide ou au générateur de vide, disposés pour assurer lorsque celle-ci est en marche le plaquage de la feuille de support.

7. - Procédé selon l'une des revendications 1 à 6, **caractérisé par le fait que** l'on utilise, comme plate-forme de construction, un réceptacle, notamment en métal ou matière plastique, de forme plate, dont le fond présente des perforations reliées à une pompe à vide et qui reçoit une grille, notamment en métal, la feuille de support venant s'appliquer sur la bordure libre du réceptacle et sur la grille, ladite pompe à vide étant mise en service pour plaquer ladite feuille de support sur la bordure libre du réceptacle et sur la grille en formant la surface rigide et fixe de réception des couches successives de composition photodurcissable, et mise hors service pour détacher ladite feuille de support de ladite plate-forme.

8. - Procédé selon l'une des revendications 1 à 7, **caractérisé par le fait que** la plate-forme de construction présente un parallélisme de 0,002 à 0,1 % de la largeur de la plate-forme de construction.

9. - Procédé selon l'une des revendications 1 à 7, **caractérisé par le fait que** l'on génère un vide de 13,33 Pa - 10⁻¹⁰ Pa (0,133 mbar-10⁻¹² mbar) .

10. - Machine de fabrication par la technique de procédés additifs de pièces crues en un matériau choisi parmi les matériaux céramiques et les matériaux métalliques, suivant lequel des couches à base d'une composition photodurcissable comprenant ledit ou lesdits matériaux céramiques et métalliques à l'état pulvérulent et une partie organique comprenant au moins un monomère et/ou un oligomère photodurcissable et au moins un photoinitiateur sont amenées successivement à durcir par irradiation selon un motif défini pour chaque couche, la première couche étant formée sur une plate-forme de construction (1), et chaque autre couche étant formée puis amenée à durcir sur la couche précédente,
la machine comportant des moyens d'aspiration contre ladite plate-forme de construction (1) d'une feuille de support (4) destinée à la couvrir avant la réalisation de la première couche, en formant une surface de réception des couches successives, apte à retenir sur celle-ci les couches successives formées, lesdits moyens d'aspiration étant aptes à être désactivés pour détacher de ladite plate-forme (1) ladite feuille de support (4) sur laquelle se trouve la pièce crue (5) avec la partie de la composition photodurcissable qui n'a pas été durcie,
la plate-forme de construction (1) étant une plaque plane rainurée en un matériau rigide, tel que céramique, métallique ou plastique, dont on recouvre la face libre par la feuille de support (4) et qui est reliée, par sa face opposée, aux moyens d'aspiration,
ladite feuille de support (4) étant déformable pour permettre, une fois l'aspiration supprimée, de décrocher la pièce crue (5) de celle-ci par application d'une contrainte sur ladite feuille (4) de manière à la déformer dans le but de libérer la pièce crue,
ladite machine comportant également des moyens (2) d'irradiation des couches successives,
**caractérisée par le fait que** la plate-forme de construction (1) présente une rugosité Ra de 0,4 à 3,2 um et un parallélisme de 0,002 à 0,1 % de la largeur de la plate-forme de construction (1) ; et
la feuille de support (4) est une feuille polymère présentant une épaisseur de 0,05 à 5 mm et une planéité inférieure à 70 % de l'épaisseur d'une couche, de préférence inférieure à 40 % de l'épaisseur d'une couche.
